# EUROPEAN PATENT SPECIFICATION

(11) **EP 1 247 467 B1**
(45) Date of publication and mention of the grant of the patent: **13.10.2004**
(21) Application number: 01830240.6
(22) Date of filing: 06.04.2001
(51) Int. Cl.: A42B 3/04

(54) **Protective helmet with rearview optical system**
Schutzhelm mit Rückblickspiegeleinrichtung
Casque de protection muni d'un système rétroviseur

(43) Date of publication of application: 09.10.2002
(73) Proprietor: CEO Centro di Eccellenza Optronica, 50125 Arcetri, Firenze (IT)
(72) Inventor: Longobardi, Giuseppe, 50125 Firenze (IT); Francini, Franco, 50124 Firenze (IT); Regini, Renzo, 50134 Firenze (IT); Ciamberlini, Claudio, 50144 Firenze (IT)
(74) Representative: Mannucci, Michele

(56) References cited:
- EP-A- 0 213 890
- EP-A- 1 064 860
- DE-A- 2 730 635
- GB-A- 2 097 147
- US-A- 2 152 726
- US-A- 3 978 526

## Description

### Technical Field

The present invention relates to a protective helmet in particular for use by cyclists, motorcyclists, racing-car drivers and the like, in both the amateur sphere and the sporting and competitive sphere which comprises an optical rearview system which enables vision of the scene behind the user.

### State of the Art

There exist numerous studies aimed at solving the problem of being able to view the scene behind him by the person who is wearing a protective helmet, especially a helmet for use by motorcyclists and racing-car drivers. Many of these attempts have not enabled acceptable results to be achieved.

US-A-3804495 describes a rearview system based upon a complex of reflecting mirrors. This system is cumbersome in so far as it is applied outside the helmet, and more in particular above a fixed visor that projects from the helmet. A rearview system of this type, in addition to not being practical, is not even compatible with current safety standards, which forbid the presence on the protective helmet of projecting objects. It moreover does not enable an optimal vision of the scene behind.

IT-B-1155186 describes a rearview system built into the thickness of the helmet. This rearview system is made up, as a whole, of reflecting elements such as prisms and mirrors. The system is cumbersome and inadequate to provide a sufficiently ample vision. The inclination of the incoming beam is not optimal and does not enable a complete view of the scene behind. In certain conditions, the rearview system does not enable rearviewing at all. For instance, competitive use in the motorcycling field is ruled out on account of the riding position assumed by the racing motorcyclist: if he were to wear a helmet of this type, he would not be able to see the scene behind him at all.

WO-A-9710731 describes a further rearview system which envisages a hollowed-out channel inside the helmet. A series of mirrors arranged along the channel has the function of deviating the beam from the rear beam-entrance point towards the front beam-exit point. In addition to the drawbacks already highlighted in reference to the device described in IT-B-1155186, this system presents the disadvantage that the reflecting surfaces are subject to soiling and cannot be reached for effective cleaning. For this reason, the system rapidly loses the capacity for guaranteeing an acceptable view.

DE-A-2730635 describes a helmet with a rearview system housed in a component surmounting the helmet and articulated to it. This system is cumbersome and dangerous and is unsuitable for use in competition racing, also on account of the impossibility of providing a picture of the scene outside when the motorcyclist assumes the typical riding position on a two-wheeled vehicle when racing.

EP-A-0213890 describes a rearview system applied to a protective helmet, which uses reflecting mirrors. The system is complex and cumbersome, as well as affording a very limited view of the scene behind.

EP-A-0007432 describes a helmet with a rearview system in which within the thickness of the helmet optical components are arranged for transmitting and deviating the optical beam. One of these optical components is a length of optical fiber. For the particular use described, the optical fiber must be of the coherent type. Orientation of the incoming beam is not optimal and does not enable viewing in the case of use of the helmet in competition circumstances.

EP-A-1064860 describes a rearview helmet of a more efficient conception. In this helmet, the rearview system comprises an optical path obtained in the thickness of the helmet, which uses reflecting elements. The image is reflected preferably onto a reflecting element applied on the visor. This rearview system is better than the previous ones but may prove other than optimal in certain situations of use on account of the angle of the beam entering the optical path.

A further protective helmet comprising a rearview system is known from GB-A-2 097 147.

### Objects and summary of the invention

The object of the present invention is to provide a protective helmet having a rearview system that enables an optimal vision of the scene behind to be obtained even when the conditions of use of the helmet are modified, for example, when the riding or driving position of the motorcyclist or racing driver wearing the helmet is modified.

This and other objects and advantages that will become clear to persons skilled in the field from the ensuing text are obtained substantially with a protective helmet that comprises an optical path having an entrance point at the back provided with an objective and having an exit point at the front provided with an eyepiece for conveying towards the eye of the user an image of the scene behind him, and, along said optical path, means for deviating the beam from the objective to the eyepiece. Characteristically, according to the invention, the objective is rotatively mounted for adjustment of inclination of the entrance axis of the optical path. In addition, advantageously and preferably set along the optical path is a derotator member (for example, a derotating prism) to maintain the correct inclination of the image that reaches the eyepiece when the inclination of the objective at the entrance to the optical path is varied.

According to a practical embodiment of the invention, the objective is contained in a sleeve hinged about an axis of oscillation orthogonal to the optical axis of the objective.

Advantageously, along the optical path in the vicinity of the objective, at least two reflecting surfaces can be provided that deviate the incoming beam arriving from the objective in a direction parallel to said axis of rotation and bring it back into a direction orthogonal to the axis of rotation and parallel to the main axis of said optical path. Also a number of reflecting surfaces may be envisaged, for example four reflecting surfaces, in order to obtain a substantial alignment of the beam, and hence a reduced encumbrance of the device with respect to the helmet, as will be clarified in what follows with reference to an embodiment of the invention. The reflecting surfaces may consist of surfaces of optical prisms.

To simplify the use of the helmet, it is possible advantageously to envisage that the de-rotating member comprises a maneuvering element accessible from outside the helmet to rotate the de-rotating member. The possibility is not to be ruled out of a mechanical connection between the objective and the de-rotating member, which will enable a rotation of the de-rotating member when the orientation of the objective is modified. For example, a mechanical gear transmission may be provided.

Further advantageous characteristics and embodiments of the helmet according to the invention are set forth in the attached dependent claims.

### Brief description of the drawings

A better understanding of the invention will be obtained from the description and attached drawing, which shows a non-limiting practical embodiment of the invention. In the drawing:
Figs. 1 and 2 show two side views of the helmet at two different inclinations that it may assume during use;
Fig. 3 shows a section according to the plane III-III of Fig. 1;
Fig. 4 shows an enlarged view of the optical rearview system;
Fig. 5 shows, in a section similar to the section of Fig. 3, a modified embodiment of the device;
Fig. 6 shows a schematic section of the refracting element set along the optical path of the rearview system;
Fig. 7 shows a side view of a modified helmet;
Fig. 8 shows a front view according to the plane VIII-VIII of Fig. 7;
Fig. 9 shows a section similar to that of Fig. 5 with a different disposition of the optical path, usable, for example, in the helmet of Figs 7 and 8.

### Detailed description of preferred embodiments of the invention

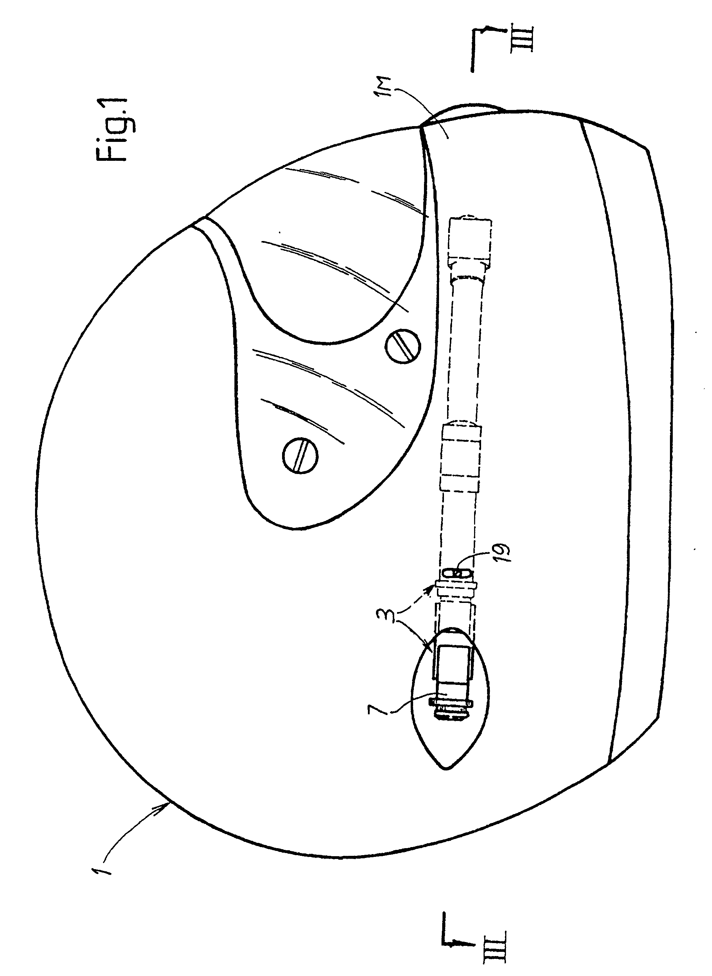

Figures 1 to 4 show a first possible embodiment of the helmet according to the invention. The helmet is designated as a whole by 1 and contains within its thickness a rearview optical path 3, the ends of which come out, one at the rear and the other at the front, approximately at the level of the chin piece 1 M of the helmet 1.

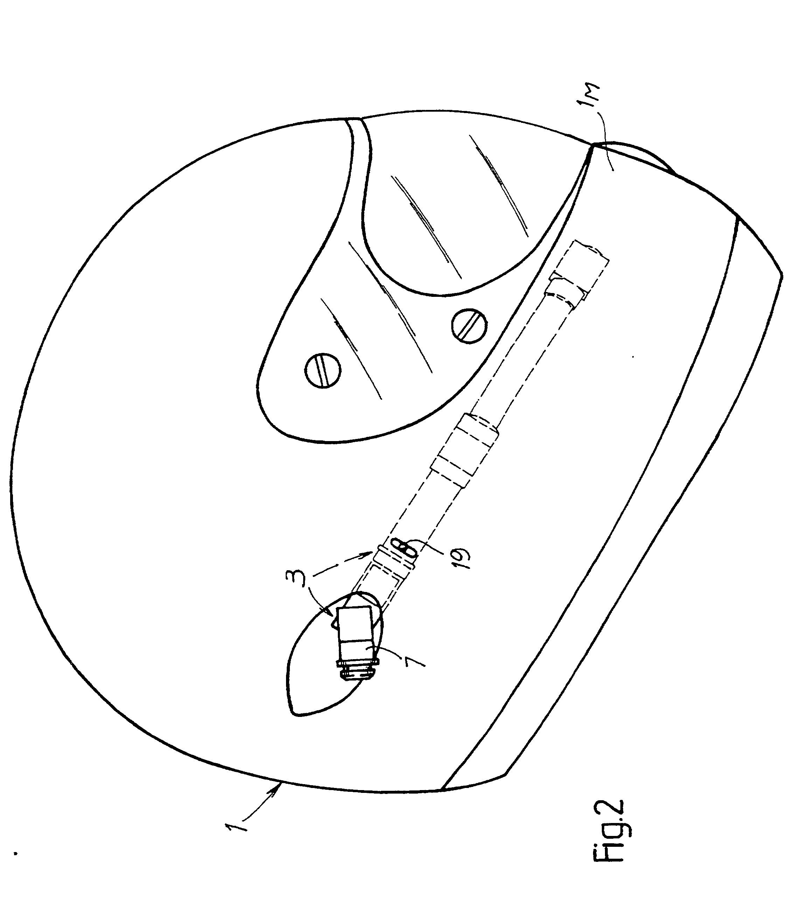

As may be noted from a comparison between Figures 1 and 2, the helmet can be used set at different angles. For example, if it is used in car racing, the racing driver will assume a position whereby the helmet will be set at an angle as illustrated in Fig. 1. Instead, a motorcyclist will tend to assume a position markedly inclined forwards on the handlebars of the motorcycle, and consequently the helmet will assume the angle illustrated in Fig. 2. The rearview system according to the invention enables optimal rear vision in both situations, and in general whatever the inclination of the user's head with respect to the horizontal. As may already be noted from the comparison between Fig. 1 and Fig. 2, this is obtained by appropriately inclining the rear part or the entrance part of the optical path 3.

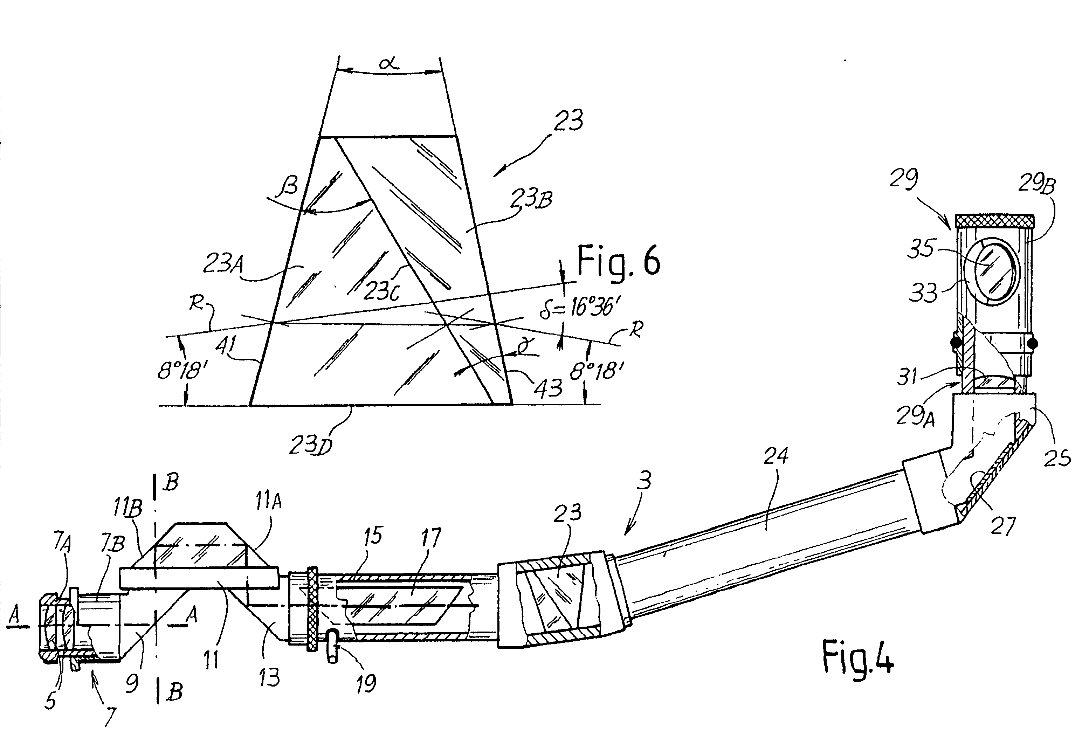

The rearview optical path 3 is shown in detail in Fig. 4. It comprises an objective 5 housed in a sleeve 7 consisting of two tubular components 7A and 7B that are able to slide one inside the other telescopically to enable an appropriate adjustment. The sleeve 7 is integral with a first reflecting right prism 9, which is mounted so that it is set opposite to a second prism 11 with a double reflecting face. The sleeve 7 and the prism 9 are mounted, forming a single integral piece, on the prism 11 so as to be able to oscillate about an axis B-B orthogonal to the axis A-A of the objective 5. The junction between the prism 9 and the prism 11 is such that, once the desired inclination of the sleeve 7, the objective 5 and the prism 9 with respect to the prism 11 has been reached, this inclination is maintained until there is a new voluntary maneuver performed on the sleeve 7. The foregoing may be obtained with a connection that offers a sufficient friction, for example a flange fixed integral to the prism 9 and inserted into an annular guide that is fixed to the prism 11.

Integral with the prism 11 is a third prism 13, similar to the right prism 9, which is in turn fixed to a sleeve 15. The sleeve 15, which has an axis almost aligned to the axis of the objective 7 when the latter is inclined as shown in Fig. 1, contains within it a Dove prism 17. The latter is supported so as to be able to turn about the axis C of the sleeve 15, which also constitutes the main axis of the optical path.

Rotation of the Dove prism 17 is controlled by a lever 19, which projects from the helmet within which the optical path 3 is contained. The Dove prism 17 is supported inside the sleeve 15 so as to be able to rotate in the aforesaid way, but with a sufficient friction to enable, once a given angular position has been assumed, the said position to be maintained until there is a new adjustment by means of the lever 19. This can be obtained, for example, by means of an internal annular guide integral with the sleeve 15 and a corresponding annular projection that is integral with the prism 17.

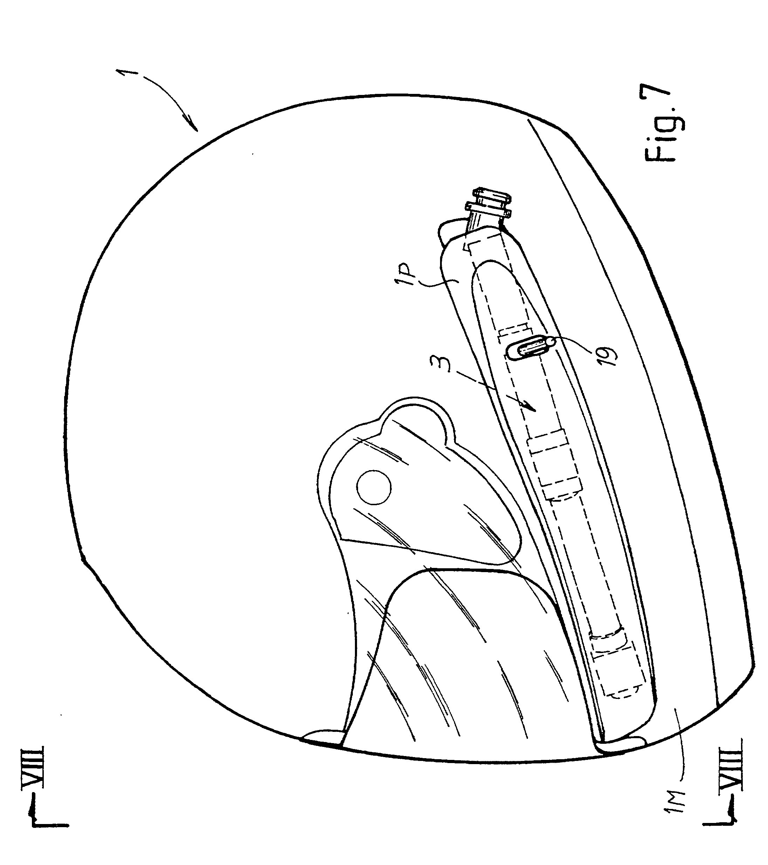

Downstream of the Dove prism 17, the optical path 3 has a refracting element 23, which will be described in greater detail with reference to Fig. 6. Downstream of this refracting element 23, the optical path continues inside a tube 24, which engages in an angular connector 25, inside which a reflecting surface 27 is contained.

Integral with the angular connector 25 is a first portion 29A of a sleeve 29 made up of two portions, 29A and 29B, which can slide axially with respect to one another and are angularly mobile with respect to one another. Set inside the portion 29A is an eyepiece 31, whilst set inside the portion 29B is a mirror 33, in a position aligned with an observation aperture 35, which is set in a position suitable for enabling the user to observe the scene appearing on the mirror 33.

Further dioptric components and possible diaphragms can be arranged inside the optical path, but are not represented for reasons of simplicity.

As schematically represented in Fig. 4, the optical beam representing the image of the scene behind the person wearing the helmet is picked up by the objective 5 and, proceeding along the axis A-A, reaches the reflecting surface of the prism 9. The said beam is reflected once through 90° by the reflecting surface of the prism 9. The beam reflected by the prism 9 is parallel to the axis B-B and undergoes two consecutive reflections inside the prism 11 as a result of the internal reflecting surfaces 11A and 11B of the latter. The beam reflected by the surface 11B reaches the reflecting surface of the optical prism 13 and is again deviated for a fourth time at right angles.

The beam leaving the prism 13 reaches the Dove prism 17 and is refracted and reflected within the latter to reach the refracting element 23, from which it is deviated to become parallel to the axis of the tube 24, at the end of which the beam is deviated by reflection on the reflecting surface 27 towards the eyepiece 31, and from here is sent on to the mirror 33, which is oriented so as to enable viewing of the image that is thus perceived by the user.

In Fig. 4, the objective 5 and the corresponding sleeve 7 are in an angular position such that the axis A-A is on the same plane as the axes B-B and C. This set-up corresponds to that of Fig. 1. In the side view, the optical path 3 appears rectilinear. If, instead, the user of the helmet is to assume the posture of Fig. 2, the sleeve 7 and the objective 5 must be suitably inclined about the axis B-B. The consequent rotation that the image observed on the mirror 33 would undergo is corrected by means of the Dove prism 17, which constitutes a de-rotating member. As is known from optics, the rotation undergone by the image on account of the modification of the inclination of the entrance axis A-A is corrected by a rotation through an angle corresponding to approximately one half of the prism 17. This rotation is obtained by acting on the lever 19.

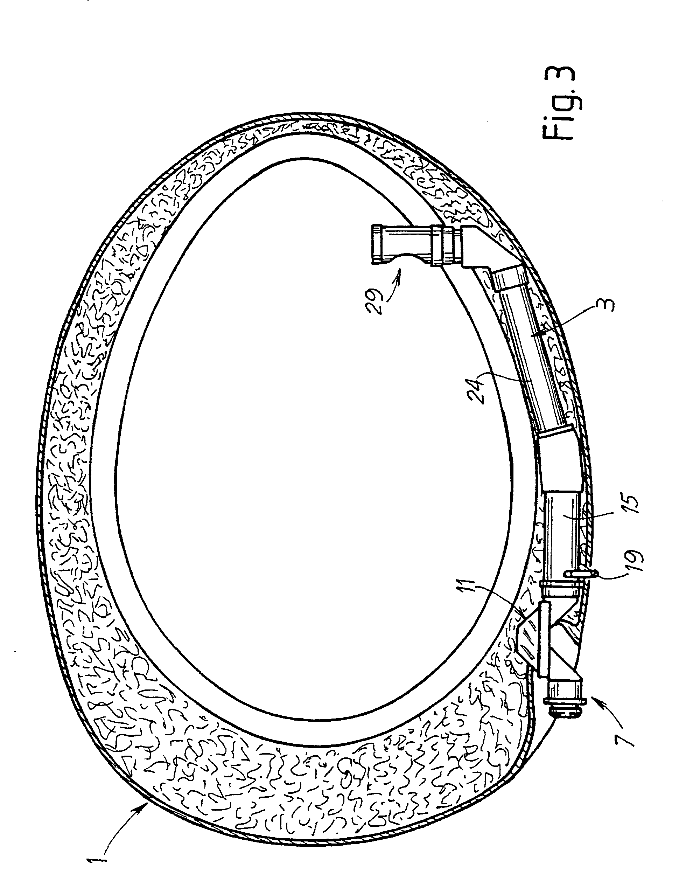

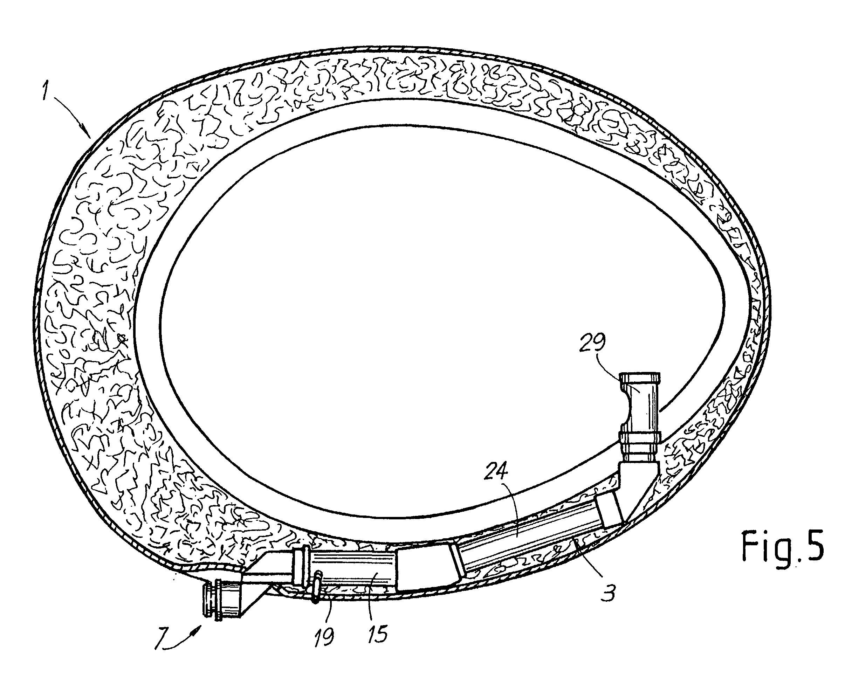

The arrangement of the prisms 9, 11, 13 is such that the axis of the optical beam deviated along the axis of oscillation B-B of the sleeve 7 containing the objective 5 is brought back onto the axis C, which is found approximately on the plane of oscillation of the axis of the sleeve 5 or in the proximity of the latter axis, this plane being orthogonal to the plane of Fig. 5 and presenting a trace corresponding to the axis A-A. In this way, as may be noted in particular from Fig. 3, the entire optical path 3 can be contained inside the traditional overall dimensions of the helmet, without any need to alter the outer profile of the helmet, for example by means of the addition of lateral components for containing the optical path. The only thing that projects from the helmet 1 is the sleeve 7 which houses the objective 5 for the purpose of receiving the image of the scene appearing behind and also for the purpose of enabling modification of the inclination of the sleeve 7.

Fig. 5 shows a modified embodiment of the optical path. The same reference numbers designate parts that are the same or that correspond to the ones of Figs. 1 to 4. Basically, the difference with respect to the embodiment described hitherto lies in the omission of the prism 11. The incoming beam from the objective 5 undergoes, in this way, just two reflections by the prisms 9 and 13, which are interfaced to one another by means of the joint that enables rotation about the axis B-B. As may be seen from Fig. 5, this arrangement affords the advantage of a smaller number of optical components and greater brightness of the image (which results from the reduction in the number of components and in the number of reflections), with larger overall dimensions of the optical path with respect to the traditional profile of the helmet. In this case, the use of a covering component applied to the helmet 1 may become necessary.

Fig. 6 shows an enlargement of the refracting element 23. This element is made up of a pair of optical wedges 23A and 23B cemented together, with the use of an appropriate optical cement, along an interface surface 23C. Altogether, the refracting element amounts to a prism with an isosceles trapezoidal section, with an entrance surface 41 constituted by one of the faces of the wedge 23A, and an exit surface 43 constituted by one face of the optical wedge 23B. The two faces 41 and 43 form an angle α of approximately 27° between them.

The wedge 23A has an angle β, formed by the face 41 and the interface 23C, of approximately 45°. The angle formed by the beam-exit surface 43 of the wedge 23B and by the interface 23C, designated by y, is approximately 18 28'.

The wedge 23A has an index of refraction of 1.691 and is made, for instance, of LHK9 glass, whilst the wedge 23B has an index of refraction of 1.784 and is made, for instance, of SF11 glass.

Fig. 6 indicates, by way of example, the median ray R incident on the face 41 of the wedge 23B with an angle of 8° 18' with respect to the base 23D of the refracting element 23. With the angles described above and the above-mentioned indices of refraction, the ray R undergoes a series of refractions inside the wedge 23 to come out after undergoing a deviation δ of 16° 36', as shown in Fig. 6.

If necessary, even a number of successive refracting elements can be used, this also depending upon the inclination of the tube 24 and the sleeve 29 with respect to one another. It is moreover possible to envisage, for example, the elimination of the reflecting surface 27 and its replacement with one or more refracting elements of the type described, or in any case with elements presenting optical properties such as to obtain the optical path necessary for the beam to reach the eyepiece, which can be set in a sleeve that has a different inclination from the one illustrated in the drawing.

The device that enables adjustment of the inclination of the objective with respect to the rest of the optical path can be combined with an optical path obtained even in a different way, both as regards the shape and as regards the type of components used, from the one described and illustrated in the attached figures.

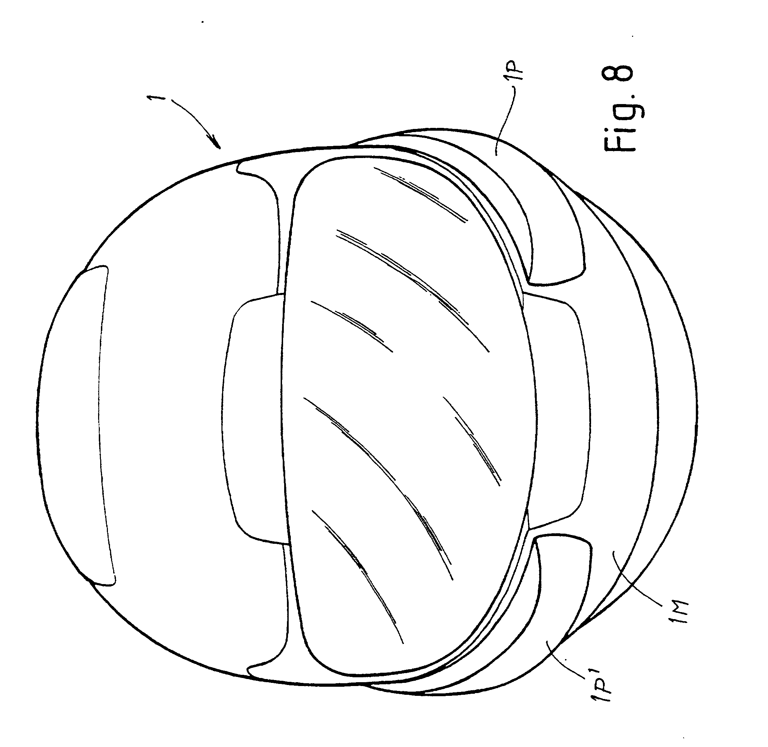

Fig. 7 and 8 show a helmet provided with a device according to the invention housed in a lateral protuberance 1P of the helmet. This protuberance may be made as a removable component, which may even be such as to come away, together with all the components set in the optical path 3 of the rearview system, from the rest of the helmet in the event of an impact, in order to prevent any possible risk of injury to the user. As may be seen in Fig. 8, the helmet is equipped with a protuberance 1 P', which is symmetrical, not only for esthetic reasons but also for aerodynamic reasons. No optical component is contained in the protuberance 1P'. On the other hand, the possibility of making a second optical path for rearviewing that can be inserted in this second protuberance is not ruled out. The two side protuberances 1P, 1P' are made, for instance, in the form of shells applied on the rest of the helmet, the main body of which has an opening for passage of the optical path. Alternatively the protuberances may be made of a single piece with the rest of the helmet. The protuberances have an aerodynamic shape and are located at the same height as the chin piece 1 M.

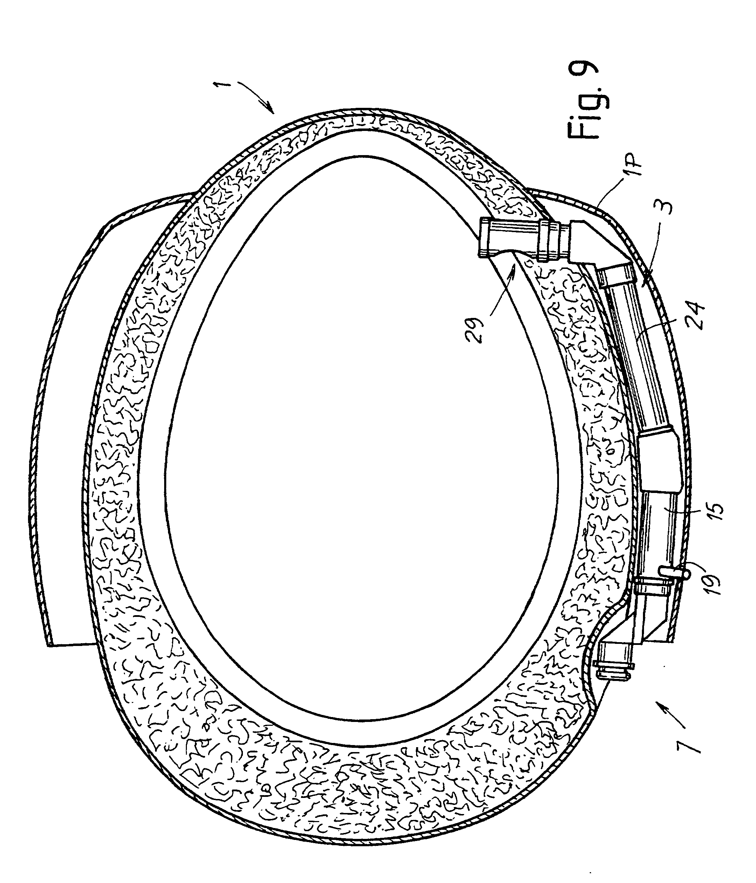

Figure 9 shows a section similar to the section of Fig. 5, with a different conformation of the optical path. In this case, the optical path lies outside the main profile of the helmet and can be contained, for example in a lateral protuberance of the type illustrated in Figs. 7 and 8.

It is understood that the drawing illustrates only one practical embodiment of the invention, which may vary in its forms and dispositions, without, on the other hand, departing from the scope of the idea lying at the basis of the invention. Any reference numbers appearing in the attached claims have the purpose of facilitating reading thereof in the light of the foregoing description and of the attached drawings, but does not limit the scope of protection of the claims.

## Claims

1. A protective helmet (1) comprising an optical path (3) having an entrance point at the rear provided with an objective (5) and having an exit point at the front provided with an eyepiece (31) for conveying towards the eye of the user an image of the scene behind him, and, along said optical path, means (9, 11, 13, 17) for deviating the beam from the objective (5) to the eyepiece (31), **characterized in that** said objective (5) is rotatively mounted to enable adjustment of the inclination of the entrance optical axis of said path.

2. The helmet according to Claim 1, **characterized in that**, set along said optical path is a de-rotating member (17) for maintaining the correct inclination of the image that reaches the eyepiece.

3. The helmet according to Claim 1 or 2, **characterized in that** said objective (5) is contained in a sleeve (7) hinged about one axis of rotation orthogonal to the entrance optical axis of the objective.

4. The helmet according to Claim 3, **characterized in that** arranged along said optical path, in the proximity of the objective, are at least two reflecting surfaces (11A, 11B) which deviate the incoming beam arriving from the objective in a direction parallel to said axis of rotation and bring it back into a direction orthogonal to the axis of rotation and parallel to the main axis of said optical path.

5. The helmet according to Claim 4, **characterized in that** it comprises four reflecting surfaces along the optical path for deviating the beam between the objective (5) and the de-rotating device (17).

6. The helmet according to Claim 5, **characterized in that** said four reflecting surfaces reflect the incoming beam, each through approximately 90°, to bring the incoming beam to the de-rotating member (17) approximately on the plane of rotation of the optical axis of the objective or in the proximity of said plane,

7. The helmet according to at least Claim 2, **characterized in that** said de-rotating member (17) comprises a de-rotating prism which rotates about the axis of the optical path.

8. The helmet according Claim 7, **characterized in that** said de-rotating prism (17) is a Dove prism, a Pechan prism, an Amici prism, or equivalent.

9. The helmet according to at least Claim 2, **characterized in that** said de-rotating member (17) comprises a maneuvering element (19) that is accessible from outside the helmet for rotating the de-rotating member.

10. The helmet according to Claim 4, **characterized in that** at least one of said reflecting surfaces is formed by a right prism.

11. The helmet according to Claim 5, **characterized in that** said four reflecting surfaces are made up of three optical prisms (9, 11, 13).

12. The helmet according to one or more of the foregoing claims, **characterized in that** arranged along said optical path is at least one refracting element (17).

13. The helmet according to Claim 12, **characterized in that** arranged along said optical path, downstream of the de-rotating member (17), is at least one reflecting element.

14. The helmet according to one or more of the foregoing claims, **characterized in that** the angle of said eyepiece (31) can be adjusted.

15. The helmet according to one or more of the foregoing claims, comprising side protuberances (1P, 1P'), inside at least one of which the optical path (3) is contained.

16. The helmet according to Claim 15, **characterized in that** said protuberance (1P, 1P') is applied on the main body of the helmet and can detach therefrom in the event of impact.

17. The helmet according to one or more of the foregoing claims, **characterized in that** said protuberances (1P, 1P') are made at the same height as the chin piece of the helmet and have an aerodynamic profile.

## Patentansprüche

1. Schutzhelm (1), umfassend einen Strahlengang (3) mit einem Eintrittspunkt an der Rückseite, der mit einem Objektiv (5) versehen ist, und mit einem Austrittspunkt an der Vorderseite, der mit einem Okular (31) versehen ist, welches dazu dient, zum Auge des Benutzers ein Bild der Szene hinter ihm zu transportieren, und entlang dem Strahlengang Mittel (9, 11, 13, 17) zum Ablenken des vom Objektiv (5) kommenden Strahls zum Okular (31), **dadurch gekennzeichnet, dass** das Objektiv (5) auf eine Weise drehbar befestigt ist, dass eine Einstellung der Neigung der Eintrittslichtachse des Strahlengangs möglich ist.

2. Helm nach Anspruch 1, **dadurch gekennzeichnet, dass** entlang dem Strahlengang ein Entrotationselement (17) angeordnet ist, das dazu dient, die korrekte Neigung des beim Okular ankommenden Bildes zu bewahren.

3. Helm nach Anspruch 1 oder 2, **dadurch gekennzeichnet, dass** das Objektiv (5) in einer Hülse (7) enthalten ist, die um eine Rotationsachse im rechten Winkel zur Eintrittslichtachse des Objektivs schwenkbar festgemacht ist.

4. Helm nach Anspruch 3, **dadurch gekennzeichnet, dass** entlang dem Strahlengang in der Nähe des Objektivs mindestens zwei reflektierende Oberflächen (11A, 11B) angeordnet sind, welche den eintreffenden Strahl ablenken, der vom Objektiv in einer Richtung parallel zur Rotationsachse ankommt, und diesen zurück in eine Richtung im rechten Winkel zu der Rotationsachse sowie parallel zu der Hauptachse des Strahlengangs bringen.

5. Helm nach Anspruch 4, **dadurch gekennzeichnet, dass** er vier reflektierende Oberflächen entlang dem Strahlengang umfasst, die dazu dienen, den Strahl zwischen dem Objektiv (5) und dem Entrotationselement (17) abzulenken.

6. Helm nach Anspruch 5, **dadurch gekennzeichnet, dass** die vier reflektierenden Oberflächen den eintreffenden Strahl jeweils um annähernd 90° reflektieren, um den eintreffenden Strahl annähernd auf der Rotationsebene der optischen Achse des Objektivs oder in der Nähe dieser Ebene zum Entrotationselement (17) zu bringen.

7. Helm mindestens nach Anspruch 2, **dadurch gekennzeichnet, dass** das Entrotationselement (17) ein Entrotationsprisma besitzt, das um die Achse des Strahlengangs rotiert.

8. Helm nach Anspruch 7, **dadurch gekennzeichnet, dass** das Entrotationsprisma (17) ein Dove-Prisma, ein Pechan-Prisma, ein Amici-Prisma oder ein Äquivalentes ist.

9. Helm mindestens nach Anspruch 2, **dadurch gekennzeichnet, dass** das Entrotationselement (17) ein Manövrierelement (19) umfasst, das zum Rotieren des Entrotationselements von der Außenseite des Helms erreichbar ist.

10. Helm nach Anspruch 4, **dadurch gekennzeichnet, dass** mindestens eine der reflektierenden Oberflächen von einem geraden Prisma gebildet wird.

11. Helm nach Anspruch 5, **dadurch gekennzeichnet, dass** die vier reflektierenden Oberflächen aus drei optischen Prismen (9, 11, 13) gebildet sind.

12. Helm nach einem oder mehreren der vorangehenden Ansprüche, **dadurch gekennzeichnet, dass** entlang dem Strahlengang mindestens ein Brechungselement (17) angeordnet ist.

13. Helm nach Anspruch 12, **dadurch gekennzeichnet, dass** entlang dem Strahlengang, stromabwärts des Entrotationselements (17) mindestens ein Reflexionselement angeordnet ist.

14. Helm nach einem oder mehreren der vorangehenden Ansprüche, **dadurch gekennzeichnet, dass** der Winkel des Okulars (31) eingestellt werden kann.

15. Helm nach einem oder mehreren der vorangehenden Ansprüche, umfassend seitliche Höcker (1P, 1P¹), von denen mindestens einer in seinem Inneren den Strahlengang (3) enthält.

16. Helm nach Anspruch 15, **dadurch gekennzeichnet, dass** der Höcker (1P, 1P¹) auf dem Hauptkörper des Helms angebracht ist und im Falle eines Aufpralls sich von diesem trennen kann.

17. Helm nach einem oder mehreren der vorangehenden Ansprüche, **dadurch gekennzeichnet, dass** die Höcker (1P, 1P¹) in der selben Höhe wie das Kinnstück des Helms vorgesehen sind und ein aerodynamisches Profil aufweisen.

## Revendications

1. Casque de protection (1) comprenant un chemin optique (3) ayant un point d'entrée à l'arrière muni d'un objectif (5) et ayant un point de sortie à l'avant muni d'un oculaire (31) pour transporter vers l'oeil de l'utilisateur une image de la scène derrière lui, et, le long dudit chemin optique (3), des moyens (9, 11, 13, 17) pour dévier le faisceau de l'objectif (5) vers l'oculaire (31), **caractérisé en ce que** ledit objectif (5) est monté de manière rotative pour permettre le réglage de l'inclinaison de l'axe optique d'entrée dudit chemin.

2. Casque selon la revendication 1, **caractérisé en ce que**, placé le long dudit chemin optique se trouve un élément de dérotation (17) pour maintenir l'inclinaison correcte de l'image qui atteint l'oculaire.

3. Casque selon la revendication 1 ou 2, **caractérisé en ce que** ledit objectif (5) est logé dans un manchon (7) articulé autour d'un axe de rotation orthogonal à l'axe optique d'entrée de l'objectif.

4. Casque selon la revendication 3, **caractérisé en ce que** disposées le long dudit chemin optique, à proximité de l'objectif se trouvent au moins deux surfaces réfléchissantes (11A, 11B) qui dévient le faisceau entrant provenant de l'objectif dans une direction parallèle audit axe de rotation et le ramène dans une direction orthogonale à l'axe de rotation et parallèle à l'axe principal dudit chemin optique.

5. Casque selon la revendication 4, **caractérisé** en ce quil comprend quatre surfaces réfléchissantes le long du chemin optique pour dévier le faisceau entre l'objectif (5) et l'élément de dérotation (17).

6. Casque selon la revendication 5, **caractérisé en ce que** lesdites quatre surfaces réfléchissantes réfléchissent le faisceau entrant, chacune de 90° environ, pour amener le faisceau entrant vers l'élément de dérotation (17) approximativement dans le plan de rotation de l'axe optique de l'objectif ou à proximité dudit plan.

7. Casque selon au moins la revendication 2, **caractérisé en ce que** ledit élément de dérotation (17),comprend un prisme de dérotation qui tourne autour de l'axe du chemin optique.

8. Casque selon la revendication 7, **caractérisé en ce que** ledit prisme de dérotation (17) est un prisme de Dove, un prisme de Pechan, un prisme en toit d'Amici ou analogue.

9. Casque selon au moins la revendication 2, **caractérisé en ce que** ledit élément de dérotation (17) comprend un élément de manoeuvre (19) qui est accessible depuis l'extérieur du casque pour tourner l'élément de dérotation.

10. Casque selon la revendication 4, **caractérisé en ce qu'**au moins l'une desdites surfaces réfléchissantes est constituée d'un prisme droit.

11. Casque selon la revendication 5, **caractérisé en ce que** lesdites quatre surfaces réfléchissantes sont constituées de trois prismes optiques (9, 11, 13).

12. Casque selon une ou plusieurs des revendications précédentes, **caractérisé en ce que** disposé le long dudit chemin optique se trouve au moins un élément réfractant (17).

13. Casque selon la revendication 12, **caractérisé en ce que** disposé le long dudit chemin, en aval de l'élément de dérotation (17), se trouve au moins un élément réfléchissant.

14. Casque selon une ou plusieurs des revendications précédentes, **caractérisé en ce que** l'angle dudit oculaire (31) peut être réglé.

15. Casque selon une ou plusieurs des revendications précédentes, comprenant des protubérances (IP, IP') latérales dont l'une au moins contient le chemin optique (3).

16. Casque selon la revendication 15, **caractérisé en ce que** ladite protubérance (IP, IP') est appliquée sur le corps principal du casque et peut en être séparée en cas d'impact.

17. Casque selon une ou plusieurs des revendications précédentes, **caractérisé en ce que** lesdites protubérances (IP, IP') sont créées à la même hauteur que la partie de menton du casque et ont un profil aérodynamique.
